# EUROPÄISCHE PATENTSCHRIFT

(11) **EP 1 224 996 B1**
(45) Veröffentlichungstag und Bekanntmachung des Hinweises auf die Patenterteilung: **12.07.2006**
(21) Anmeldenummer: 02000443.8
(22) Anmeldetag: 08.01.2002
(51) Int. Cl.: B23K 11/30, B23K 11/36

(54) **Verfahren zum Kühlen von Widerstandspunktschweissanlagen, insbesondere wassergekühlten Punktschweisszangen, und Einrichtung zur Durchführung des Verfahrens**
Method for cooling resistance welding machines, in particular water cooled spot weld guns, and apparatus for performing the method
Méthode de refroidissement de machines de soudage par résistance, en particulier le refroidissement par eau de pinces de soudage, et appareil permettant la mise en oeuvre du procédé

(30) Priorität: 17.01.2001 DE 10101787
(43) Veröffentlichungstag der Anmeldung: 24.07.2002
(73) Patentinhaber: Klein, Dieter, 64572 Büttelborn (DE); Becker, Fernand, 65468 Trebur (OT Geinsheim) (DE)
(72) Erfinder: Klein, Dieter, 64572 Büttelborn (DE); Becker, Fernand, 65468 Trebur (OT Geinsheim) (DE)
(74) Vertreter: Vomberg, Friedhelm

(56) Entgegenhaltungen:
- EP-A- 0 433 586
- FR-A- 1 562 884
- FR-A- 2 403 154
- GB-A- 872 698
- US-A- 2 629 804
- PATENT ABSTRACTS OF JAPAN vol. 011, no. 175 (M-596), 5. Juni 1987 (1987-06-05) & JP 62 006781 A (DAIHATSU MOTOR CO LTD), 13. Januar 1987 (1987-01-13)
- PATENT ABSTRACTS OF JAPAN vol. 011, no. 180 (M-597), 10. Juni 1987 (1987-06-10) & JP 62 009784 A (DAIHATSU MOTOR CO LTD), 17. Januar 1987 (1987-01-17)
- PATENT ABSTRACTS OF JAPAN vol. 006, no. 163 (M-152), 26. August 1982 (1982-08-26) & JP 57 079085 A (KIKUCHI KOGYO KK), 18. Mai 1982 (1982-05-18)

## Beschreibung

Die Erfindung betrifft ein Verfahren zum Kühlen von Widerstandspunktschweißanlagen, insbesondere wassergekühlten Punktschweißzangen, gemäß dem Oberbegriff des Patentanspruches 1 sowie einer Einrichtung gemäß dem Oberbegriff des Patentanspruches 2 zur Durchführung des Verfahrens (siehe, z.B., JP 62 006781 A).

Bei Widerstandsschweißmaschinen und besonders auch bei Punktschweißanlagen ist es bei Dauerbetrieb erforderlich, zumindest die Schweißelektroden zu kühlen, wozu in bekannter Weise eine Wasserkühlung vorgesehen ist, mit der ein Kühlwasserstrom kontinuierlich durch Kühlkanäle in den Schweißelektrodenhaltern und in den Schweißelektroden geführt wird. Dem Kühlwasser wird die an den Schweißelektroden aufgenommene Wärme an einem entfernt von den Schweißelektroden befindlichen Wärmetauscher wieder entzogen. Eine solche Widerstandsschweißmaschine ist zum Beispiel mit DE-U-94 20 225 beschrieben.

Mit einer solchen Kühlung gelingt es, die Standmenge der Schweißelektroden gegenüber einem ungekühlten Betrieb wesentlich zu verlängern. Nachteilig ist es jedoch, dass eine relativ große Kühlwassermenge ständig umgewälzt werden muss. Dies erfordert besonders bei Schweißanlagen mit einer Vielzahl von Schweißelektrodenpaarungen bzw. Punktschweißzangen, wie sie im Kraftfahrzeugbau Verwendung finden, erhebliche Aufwendungen zur Aufbereitung, Förderung und Rückkühlung des Kühlwassers.

Zur Reduzierung der sich hieraus ergebenden laufenden Kosten wird daher im Patent Abstract zur JP 62 006781 A eine Punktschweißanlage vorgeschlagen, die eine Pumpe zum Fördern des Kühlwassers aufweist, die lediglich dann Kühlwasser in Umlauf bringt, wenn die Elektrodenhalterungsarme und die Elektrodenspitzen zum Schweißen zusammengeführt werden.

Um die Qualität der Schweißpunkte gleichbleibend gut zu erhalten, ist es bekannt, die Kontaktspitzen der Schweißelektroden als abnehmbare Kappen auszubilden, die nach Erreichen eines noch tolerierbaren Verschleißes ausgewechselt werden. Eine solche Elektrodenkappe mit eingearbeitetem Kühlmittelkanal ist zum Beispiel mit DE 198 28 798 A1 beschrieben.

Um das Auswechseln der Elektrodenkappe zu vereinfachen, ist es gemäß EP 0 433 586 B1 bekannt, vor einer beabsichtigten Auswechslung das Kühlwasser aus den Schweißelektroden abzusaugen, wobei innerhalb der Schweißvorrichtung eine Kühlwasservorlaufleitung und eine Kühlwasserrücklaufleitung miteinander verbunden sind, sowie jeweils im Vorlauf und im Rücklauf ein Absperrhahn und eine mit dem Vorlauf und dem Rücklauf verbundene Absaugvorrichtung vorgesehen sind. Die Absaugvorrichtung besteht dabei aus einer mit der Vorlaufleitung zwischen dem Absperrhahn und der Schweißvorrichtung verbundenen Förder-Zylinder-Kolbeneinheit, deren Kolben mittels einer zum Beispiel pneumatischen Antriebseinrichtung verfahrbar ist.

Damit gelingt es, für die Dauer des Auswechselns der Elektrodenkappen oder einem sonstigen Armaturenwechsel an den Schweißzangen den Kühlwasserzulauf und Kühlwasserablauf abzusperren und auch das hinter den Absperrungen befindliche Restwasser in einen Tank abzusaugen. Bei Betrieb der Schweißanlage findet aber nach wie vor ein kontinuierlicher Kühlwasserumlauf statt. Es muss eine große Menge Kühlwasser aufbereitet und umgewälzt werden.

Der Erfindung liegt die Aufgabe zugrunde, ein Verfahren zum Kühlen von Widerstandspunktschweißanlagen zu schaffen, mit dem die Kühlwassrmenge erheblich reduziert werden kann.

Diese Aufgabe wird erfindungsgemäß mit den Merkmalen des Patentanspruches 1 gelöst.

Es ist weiterhin Aufgabe der Erfindung, eine Kühleinrichtung für Widerstandspunktschweißanlagen zu schaffen, die gegenüber den bekannten Kühleinrichtungen mit einer geringeren Kühlwassermenge auskommt.

Die Erfindung löst diese Aufgabe mit den Merkmalen des unabhängigen Anspruches 2.

Die Unteransprüche zum Anspruch 2 haben vorteilhafte Weiterbildungen der Erfindung zum Gegenstand.

Gemäß dem Verfahren wird insbesondere an den Bereich der Schweißelektroden nur die Menge an Kühlwasser gefördert, die dort zum Kühlen der Bauteile wegen der anfallenden Schweißwärme während des Schweißprozesses gebraucht wird.

Da bei Punktschweißanlagen der Schweißprozess nicht kontinuierlich abläuft, sondern zwischen dem Setzen von einzelnen Schweißpunkten eine mehr oder weniger lange Pause vorhanden ist, in welcher keine Schweißwärme erzeugt wird, kann während dieser Pausen auf die Zufuhr von Kühlwasser verzichtet werden. Da außerdem die Menge der Schweißwärme bei dem jeweiligen Schweißpunkt abhängig ist von der erforderlichen und eingestellten Schweißleistung, kann die Kühlwassermenge für die konkret beim Setzen dieses Schweißpunktes anfallende Wärmemenge bemessen werden. Somit kann die Temperatur der zu kühlenden Teile einer Punktschweißanlage in einem eng tolerierten Bereich gehalten werden. Dies gilt sowohl für die Schweißelektroden, deren Standzeit dadurch größer wird, als auch für die Kühlung beispielsweise des Schweißtransformators oder auch der Thyristorsteuerung. Als weiterer wesentlicher Vorteil ist die erhebliche Einsparung von im Umlauf befindlichem Kühlwasser zu nennen.

Mit der vorgeschlagenen Einrichtung gelingt es in einfacher Weise, eine zugemessene Kühlwassermenge zu jedem Punktschweißvorgang an die zu kühlenden Teile zu fördern. Die Kühlwassermenge wird bestimmt durch das jeweilige Arbeitsvolumen des Pumpenraumes. Es versteht sich, dass bei annähernd gleichbleibenden Schweißparametern einer Punktschweißmaschine, zum Beispiel einer Punktschweißzange, das Arbeitsvolumen des Pumpenraumes immer gleichbleibend groß sein wird. In einem solchen Fall wird es nicht erforderlich sein, für den Antrieb des Förderkolbens Vorkehrungen zu treffen, dass dessen Hub von Schweißpunkt zu Schweißpunkt unterschiedlich groß sein kann. Vielmehr wird dann der Antrieb des Förderkolbens so ausgelegt sein, dass bei jedem Kühlvorgang der Hub des Förderkolbens gleich groß ist.

Der Antrieb des Förderkolbens erfolgt in vorteilhafter Weise über einen gleichachsig angeordneten und von beiden Seiten beaufschlagbaren Antriebskolben, der mit dem Förderkolben starr verbunden ist.

Durch alternatives Beaufschlagen der beiden Seiten des Antriebskolbens mit einem Druckmedium, vorzugsweise mit Druckluft, kann über an sich bekannte Steuermittel und Ventile der Weg des Antriebskolbens und damit auch der des Förderkolbens in Abhängigkeit vom Arbeitsvorgang der Punktschweißanlage selbst und der aktuellen Schweißparameter bestimmt und ausgeführt werden.

Selbstverständlich ist der Antrieb des Förderkolbens auch elektromotorisch möglich, wobei über elektrische Mittel eine Steuerung der Hubbemessung für den Fachmann leicht realisierbar ist.

Die erfindungsgemäße Einrichtung ermöglicht neben der definierten Kühlwassermessung auch das Rücksaugen des Kühlwassers aus den Bauteilen der Punktschweißanlage, um ohne Kühlwasserverlust zum Beispiel verschlissene Elektrodenkappen der Schweißelektroden auswechseln zu können. Dazu ist lediglich in an sich bekannter Weise in der Kühlwasservorlaufleitung sowie in der Kühlwasserrücklaufleitung jeweils ein Ventil vorzusehen. Diese Ventile sind dann so anzusteuern, dass der Förderkolben der Einrichtung als Saugkolben wirkt und die in den Kühlmittelleitungen befindliche Kühlwassermenge vorübergehend in den Pumpenraum zurückgenommen wird.

Ausführungsbeispiele der Erfindung sind nachstehend anhand von Zeichnungen näher beschrieben. Es zeigen
- Fig. 1: das Schema einer Einrichtung zum Kühlen einer Punktschweißzange mit Wasserkühlung,
- Fig. 2: das Schema einer Einrichtung zum Kühlen einer Punktschweißzange mit Einbeziehung der Thyristorstufe in den Kühlwasserkreislauf,
- Fig. 3: eine vergrößerte Darstellung eines Details der Einrichtung nach Figur 1.

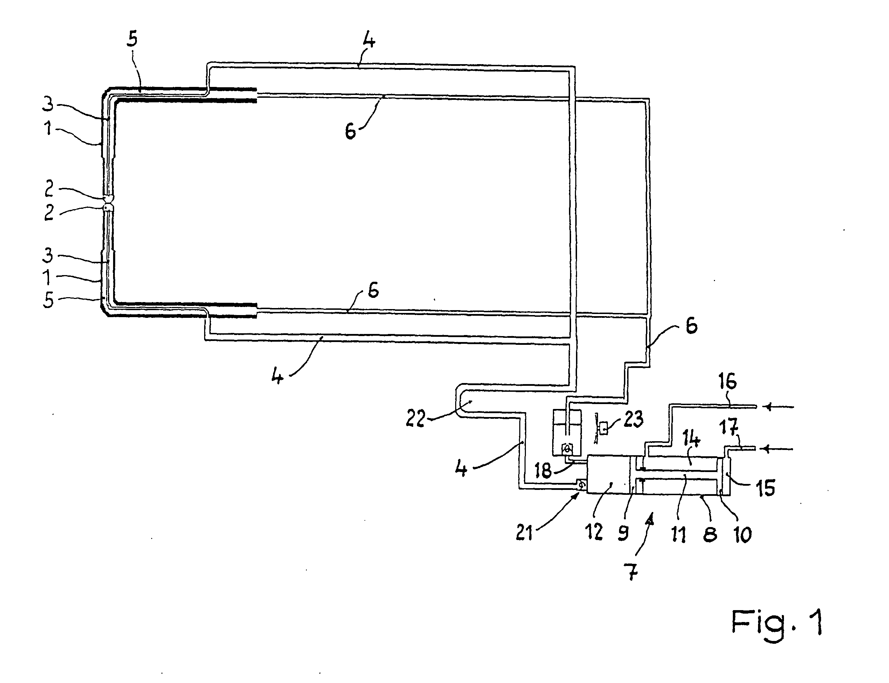

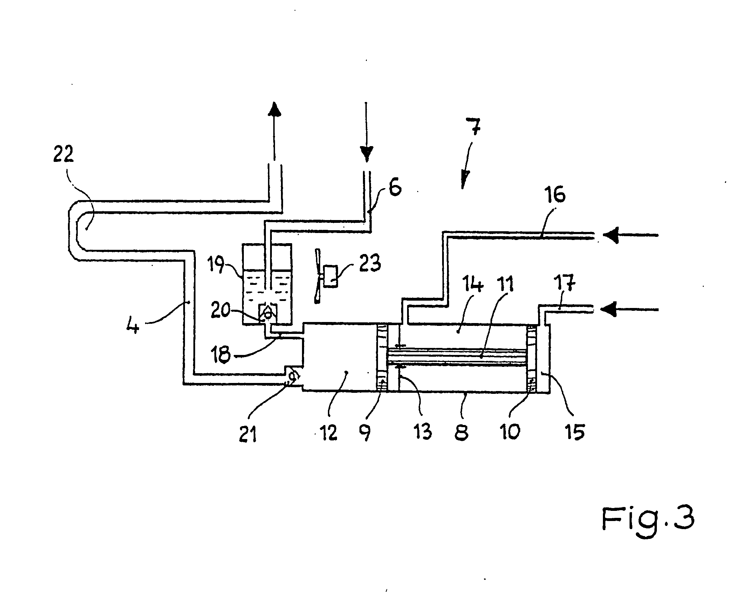

Ein erstes Ausführungsbeispiel ist mit Figur 1 und Figur 3 dargestellt und nachstehend beschrieben. Die Elektrodenarme 1 einer Punktschweißzange sind an ihren vorderen Enden mit auswechselbaren Elektrodenkappen 2 verbunden, innerhalb jedes Elektrodenarmes 1 befindet sich ein Kühlwasservorlaufkanal 3, der jeweils mit einer Kühlwasservorlaufleitung 4 verbunden ist und zu den von den Elektrodenkappen 2 gebildeten Spitzen der Elektrodenarme 1 führt.

Parallel um Kühlwasservorlaufkanal 3 befindet sich innerhalb jedes Elektrodenarmes 1 ein Kühlwasserrücklaufkanal 5, welcher jeweils von der Spitze jedes Elektrodenarmes 1 zu einer Kühlwasserrücklaufleitung 6 führt. Die Kühlwasservorlaufleitung 4, von der die Kühlwasservorlaufkanäle 3 abzweigen, wird von einer Fördereinrichtung zum Fördern von Kühlwasser gespeist.

Die Fördereinrichtung weist eine Zylinder-Kolbeneinheit 7 sowie Einrichtungen zum gesteuerten Antrieb der Zylinder-Kolbeneinheit 7 auf.

Die Zylinder-Kolbeneinheit 7 umfasse einen Zylinder 8 mit einem Förderkolben 9 sowie einem Antriebskolben 10. Der Förderkolben 9 sowie der Antriebskolben 10 sind mittels einer Kolbenstange 11 miteinander verbunden. Beide Kolben sind innerhalb des Zylinders 8 gemeinsam verschiebbar. Eine Kolbenseite des Förderkolbens 9 begrenzt einen Pumpenraum 12 während er mit der anderen Kolbenseite an der Kolbenstange 11 befestigt ist. Die Kolbenstange 11 durchdringt eine Trennwand 13 des Zylinders 8. Die Trennwand 13 begrenzt einen ersten Arbeitsraum 14 an der einen Seite des Antriebskolbens 10. Ein zweiter Arbeitsraum 15 befindet sich auf der anderen Seite des Arbeitskolbens 10. Die Arbeitsräume 14 und 15 sind mit Druckluftleitungen 16, 17 versehen. Durch alternative Ansteuerung der Druckluftleitungen 16, 17 mit Druckluft und damit alternativer Beaufschlagung der Arbeitsräume 14 und 15 mit Druck kann der Antriebskolben 10 in Abhängigkeit von einer hier nicht dargestellten Druckluftsteuerung beliebig im Zylinder 8 verschoben werden. Mit dem Antriebskolben 10 verschiebt sich im Zylinder 8 auch der Förderkolben 9. Es versteht sich, dass am Durchtritt der Kolbenstange 11 durch die Trennwand 13 eine Dichtung vorgesehen ist, die ein Entweichen von Druckluft aus dem ersten Arbeitsraum 14 an der Durchtrittsstelle verhindert.

Der Pumpenraum 12 ist über eine Leitung 18 mit einem Ausgleichsbehälter 19 verbunden, wobei in der Leitung 18 ein in Richtung vom Pumpenraum 12 zum Ausgleichsbehälter 19 sperrendes Rückschlagventil 20 vorgesehen ist.

An den Pumpenraum 2 ist die Kühlwasservorlaufleitung 4 angeschlossen, wobei in unmittelbarer Nähe des Pumpenraumes 12 in der Kühlwasservorlaufleitung 4 ein in Richtung von der Kühlwasservorlaufleitung 4 zum Pumpenraum 12 sperrendes Rückschlagventil 21 vorgesehen ist.

Die Kühlwasservorlaufleitung 4 ist, wie mit der Schleife 22 angedeutet, so verlegt, dass sie auch andere kühlungsbedürftige Teile, wie zum Beispiel einen Schweißtransformator, erreicht. Der Ausgleichsbehälter 19 ist als Kühler für das Kühlwasser ausgebildet. Zur Verbesserung des Wärmeaustausches ist ein elektrisch angetriebenes Kühlgebläse 23 vorgesehen.

Von der Steuerung der Widerstandsschweißanlage wird vorgegeben, mit welcher Leistung ein Schweißpunkt gesetzt werden soll. Dieser Leistung entsprechend oder auch gleichbleibend für jeden Schweißpunkt wird ein hier nicht dargestelltes Pneumatikventil angesteuert, welches Druckluft durch die Druckluftleitung 17 in den Arbeitsraum 15 leitet und gleichzeitig die Druckluftleitung 16 entlüftet. Vom Druck dieser Druckluft wird der Arbeitskolben 10 und mit ihm auch der Förderkolben 9 im Zylinder 8 so bewegt, dass sich der Pumpenraum 12 verkleinert. Das darin befindliche Kühlwasser wird in definierter Menge durch die Kühlwasservorlaufleitung 4 sowie die Kühlwasservorlaufkanäle 3 zu den Schweißelektroden an den Elektrodenarmen 1 gedrückt, wo es eine unzulässige Erwärmung der Bauteile verhindert. In gleicher Menge fließt Kühlwasser durch die Kühlwasserrücklaufkanäle 5 und die Kühlwasserrücklaufleitung 6 in den Ausgleichsbehälter 19. Im Ausgleichsbehälter 19 wird das Kühlwasser rückgekühlt.

Nach dem Setzen des Schweißpunktes wird von der Steuerung der Widerstandsschweißanlage das vorgenannte Pneumatikventil so angesteuert, dass durch die Druckluftleitung 16 Druckluft in den ersten Arbeitsraum 14 geleitet wird, während die Druckluftleitung 17 und damit der zweite Arbeitsraum 15 entlüftet wird. Der Arbeitskolben 10 und mit ihm der Förderkolben 9 bewegen sich in einer Richtung, bei welcher der Pumpenraum 12 vergrößert wird. Dabei wird der Pumpenraum 12 durch das Rückschlagventil 20 aus dem Ausgleichsbehälter 19 mit rückgekühltem Kühlwasser wieder aufgefüllt. Das Rückschlagventil 21 an der Kühlwasservorlaufleitung 4 bleibt dabei geschlossen.

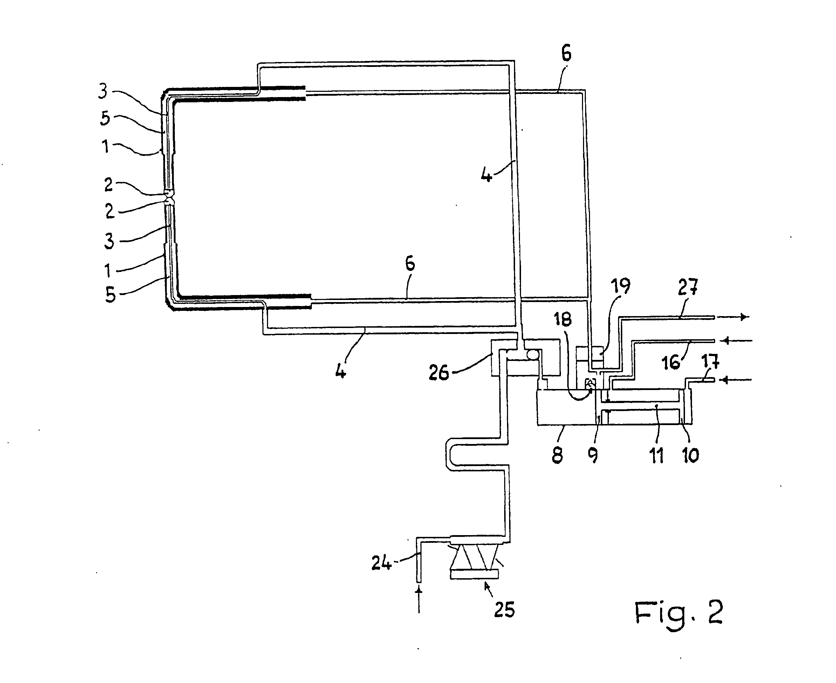

Ein zweites Ausführungsbeispiel zeigt die Figur 2, wobei die gegenüber dem ersten Ausführungsbeispiel funktionsgleichen Teile mit dem gleichen Bezugszeichen versehen sind. Nach diesem zweiten Ausführungsbeispiel wird das Kühlwasser aus einer zentralen Kühlwasseraufbereitungsanlage durch einen Kühlwasserzulauf 24 bereitgestellt. Dabei gelangt es über eine zu kühlende Thyristorsteuerung 25 zu einem hydraulischen Oder-Glied 26.

Die Zumessung des Kühlwassers nach dem aktuellen Schweißvorgang an die Elektrodenarme 1 erfolgt, wie zum ersten Ausführungsbeispiel beschrieben, durch die einmalige Hubbewegung des Förderkolbens 9. Dabei gibt das hydraulische Oder-Glied 26 in der Art eines Rückschlagventils den Weg für das Kühlwasser aus dem Pumpenraum 12 in die Kühlwasservorlaufleitung 4 frei. Beim Füllen des Pumpenraumes 12 aus dem Ausgleichsbehälter 19 wird, abweichend vom ersten Ausführungsbeispiel, ein geringer Kühlwasserstrom vom Kühlwasserzulauf 24 über das Oder-Glied 26 durch die Kühlwasservorlaufleitung 4, den Kühlwasservorlaufkanal 3, den Kühlwasserrücklaufkanal 5 und die Kühlwasserrücklaufleitung 6 zum Ausgleichsbehälter 19 fließen und durch einen Kühlwasserablauf 27 wieder zur zentralen Kühlwasseraufbereitung gelangen.

Mit dem erfindungsgemäßen Verfahren zum Kühlen von Widerstandspunktschweißanlagen kann neben einer optimalen Kühlung der Schweißelektroden, welche leistungsangepasst erfolgt, als weiterer Vorteil eine erhebliche Einsparung an Kühlwasser erzielt werden. Die bei zentraler Kühlwasserversorgung auftretenden Druckschwankungen können sich nicht negativ auf das Kühlverhalten auswirken.

Die zur Durchführung des Verfahrens vorgeschlagene Einrichtung ist mit relativ geringen technischen Mitteln realisierbar. Der Antrieb des Förderkolbens 9 kann zwar durch beliebige motorische Mittel erfolgen. Ein pneumatischer Antrieb bietet sich jedoch vorteilhaft an, da an der Mehrzahl aller Schweißmaschinen ohnehin Druckluft für andere Bewegungsprozesse vorhanden ist.

Die Einrichtung eignet sich darüber hinaus auch zum zeitweiligen Abpumpen des Kühlwassers aus den Elektrodenarmen, wie dies zum Beispiel auch mit EP 0 433 586 B1 beschrieben ist, in dem neben den Rückschlagventilen 20, 21 Bypass-Leitungen vorgesehen werden, welche über ansteuerbare Ventile freigegeben oder gesperrt werden. Zusätzliche Einrichtungen zum notwendigen Abpumpen des Kühlwassers aus den Elektrodenarmen sind somit nicht erforderlich.

## Patentansprüche

1. Verfahren zum Kühlen von Widerstandspunktschweißanlagen, insbesondere wassergekühlten Punktschweißzangen, mit einer sich zu den Schweißelektroden und weiteren zu kühlenden Teilen verzweigenden Kühlwasservorlaufleitung (4) und einer die Kühlwasserrückläufe von den Schweißelektroden und den zu kühlenden Teilen aufnehmende Kühlwasserrücklaufleitung (6), mit je einem Absperrventil (20, 21) in der Kühlwasservorlaufleitung und in der Kühlwasserrücklaufleitung, mit einer Einrichtung zum Fördern von Kühlwasser unter Druck in die Kühlwasservorlaufleitung sowie mit einem Kühler zum Rückkühlen des Kühlwassers, wobei ein Kühlwasserförderstrom zeitlich begrenzt über die Kühlwasservorlaufleitung (4) an die zu kühlenden Stellen der Widerstandsschweißanlage und von diesen über die Kühlwasserrücklaufleitung (6) zum Kühler gefördert wird,
**dadurch gekennzeichnet,**
**dass** der Kühlwasserförderstrom nur während des Schweißprozesses gefördert wird, während zwischen den Schweißprozessen das Kühlwasser nicht über einen eventuellen Ruhestrom hinaus bewegt wird und die Menge des pro Schweißprozess geförderten Kühlwassers abhängig von der aktuellen Schweißleistung angepasst wird.

2. Einrichtung zum Kühlen von Widerstandsschweißanlagen, insbesondere wassergekühlten Punktschweißzangen mit einer sich zu den Schweißelektroden und weiteren zu kühlenden Teilen verzweigenden Kühlwasservorlaufleitung (4) und einer die Kühlwasserrückläufe von den Schweißelektroden und den zu kühlenden Teilen aufnehmenden Kühlwasserrücklaufleitung (6) mit je einem Absperrventil (20, 21) in der Kühlwasservorlaufleitung und in der Kühlwasserrücklaufleitung, mit einer Fördereinrichtung zum Fördern von Kühlwasser unter Druck in die Kühlwasservorlaufleitung sowie mit einem Kühler zum Rückkühlen des Kühlwassers- zur Durchführung des Verfahrens nach Anspruch 1 -, **dadurch gekennzeichnet, dass** die Fördereinrichtung eine Zylinder-Kolbeneinheit (7) aufweist, wobei eine Kolbenseite eines Förderkolbens (9) im Zylinder (8) einen Pumpenraum (12) begrenzt, dessen Volumen dem Kühlwasserbedarf eines Schweißprozesses entspricht und der Förderkolben mit einem motorischen Antrieb verbunden ist, der Pumpenraum (12) mit der Kühlwasservorlaufleitung (4) und der Kühlwasserrücklaufleitung (6) in Verbindung steht, wobei die Absperrventile in der Kühlwasservorlaufleitung (4) sowie in der Kühlwasserrücklaufleitung (6) als in Richtung des Kühlwasserstromes öffnende Rückschlagventile (20, 21) ausgebildet sind, dass die Zylinder-Kolbeneinheit (7) einen zweiten zusätzlichen Antriebskolben (10) aufweist, der mit dem Förderkolben (9) mittels einer Kolbenstange (11) verbunden ist und der mit einer zwischen den beiden Kolben (9,10) angebauten Trennwand und dem Zylinder (8) zwei Arbeitsräume (14, 15) definiert, die mit Druckluftleitungen (16, 17) versehen sind, wobei die Drucksteuerung in diesen Druckluftleitungen (16, 17) in Abhängigkeit der aktuellen Schweißleistung mit einem von der entsprechenden Schweißleistung angesteuerten Pneumatikventil gesteuert wird, so dass sich der Kolben (9) verschiebt, um den Pumpenraum (12) zu verkleinern oder zu vergrößern, wobei das Rückschlagventil (21) mit einer einstellbaren Durchflussmengendrossel ausgestattet ist, die eine Regulierung des Kühlförderstromes ermöglicht und/oder dass in der Druckluftleitung (16, 17) eine einstellbare Regulierungseinrichtung für die Einstellung des Wasserförderstroms für die Kühlung und für die Rückbefüllung des Arbeitsraumes eingebaut ist.

3. Einrichtung nach Anspruch 2, **dadurch gekennzeichnet, dass** der motorische Antrieb des Förderkolbens (9) von einem gleichachsig mit dem Förderkolben (9) verbunden, alternativ beidseitig von einem Druckmedium beaufschlagbaren Antriebskolben (10) gebildet ist und/oder dass der motorische Antrieb des Förderkolbens (9) ein Elektroantrieb ist.

4. Einrichtung nach Anspruch 2, **dadurch gekennzeichnet, dass** sich im Verlauf der Kühlwasserrücklaufleitung (6) ein Ausgleichsbehälter (19) befindet und das als Rückschlagventil (20) ausgebildete Absperrventil im Strömungsverlauf des Kühlmittels nach dem Ausgleichsbehälter (19) angeordnet ist und/oder dass der Ausgleichsbehälter (19) als Kühler ausgebildet ist, wobei der Ausgleichsbehälter (19) vorzugsweise als Wasser-Luftwärmetauscher ausgebildet ist und die Kühlluft von einem fremd angetriebenen Kühlgebläse (23) bereitgestellt wird.

5. Einrichtung nach den Ansprüchen 2 bis 4, **dadurch gekennzeichnet, dass** in die Kühlwasservorlaufleitung (4) ein Kühlkreis (Schleife 22) zum Kühlen eines Schweißtransformators eingezogen ist und/oder dass eine für die Steuerung des Schweißtransformators vorgesehene Thyristorstufe (25) mit Luft gekühlt ist, wobei vorzugsweise sowohl ein Schweißtransformator als auch eine Thyristorstufe (25) in einen Kühlkreis der Kühlwasservorlaufleitung (4) oder Kühlwasserrücklaufleitung (6) einbezogen sind.

6. Einrichtung nach den Ansprüchen 2 bis 4, **dadurch gekennzeichnet, dass** in die Kühlwasservorlaufleitung (4) ein als Oder-Glied (26) wirkendes Ventil einbezogen ist, welches einen über die Thyristorstufe (25) und einen Schweißtransformator führenden Kühlwasserzulauf (24) aufnimmt und vom Ausgleichsbehälter (19) ein Kühlwasserablauf (27) vorgesehen ist.

7. Einrichtung nach den Ansprüchen 2 bis 6, **dadurch gekennzeichnet, dass** im Verlauf der Kühlwasservorlaufleitung (4) und in der Kühlwasserrücklaufleitung (6) ansteuerbare Ventile vorgesehen sind und die Fördereinrichtung in an sich bekannter Weise als Absaugpumpe für das Kühlwasser in den Elektrodenarmen (1) dient.

8. Einrichtung nach den Ansprüchen 2 oder 3, **dadurch gekennzeichnet, dass** als Druckmedium zur Beaufschlagung des Antriebskolbens (10) Druckluft vorgesehen ist und/oder dass das an der pneumatisch angetriebenen Schweißzange ohnehin vorhandene 5/2-Wege-Ventil als Steuerelement für die Kühleinrichtung dient.

## Claims

1. Method for cooling resistance welding machines, in particular water cooled spot weld guns, with a cooling water flow line (4) branching out to the welding electrodes and further parts to be cooled, and with a cooling water return line (6) carrying cooling water return flow from the welding gums and from the part to be cooled, with a shut-off valve (20, 21) in the cooling water flow line (4) and in the cooling water return line (6) too, with a device for carrying cooling water into the cooling water flow line under pressure and with a cooling unit for recooling the cooling water, wherein a cooling water stream is carried temporary over the cooling water flow line (4) to the parts of the resistance welding machine to be cooled and from these parts back over the cooling water return line (6) to the cooling unit,
**characterized in that**
the cooling water stream is carried only during the welding process whereas between the welding processes the cooling water is not moved in excess of a potential rest stream and that the amount of the water flow carried during each welding process is adjusted to the actual welding power.

2. Device for cooling resistance welding machines, in particular water cooled spot weld guns, with a cooling water flow line (4) branching out to the welding electrodes and further parts to be cooled, and with a cooling water return line (6) carrying cooling water return flow from the welding guns and from the parts to be cooled, with a shut-off valve (20, 21) in the cooling water flow line (4) and in the cooling water return line (6) woo, with a device for carrying cooling water into the cooling water flow line under pressure and with a cooling unit for recooling the cooling water - for performing the method of claim 1 - **characterized in that** the carrying device has a cylinder-piston-unit (7) wherein a piston face of the feed-piston (9) in cylinder (8) limits a pump room (12) the volume of which corresponds to the needs of cooling water for one welding process and that the feed piston is connected to a motor drive, that the pump room (12) is connected to the cooling water flow line (4) and to the cooling water return line (6), whereby the shut-off valves in the cooling water flow line (4) and in the cooling water return line (6) are check valves (20, 21) opening in the direction of the cooling water stream, that the cylinder-piston-unit (7) has a second additional driving piston (10) connected to the feed piston (9) by< means of a piston rod (11) and defining two operating
rooms (14, 15) by a baffle mounted between the two pistons (9, 10) and the cylinder (8), the rooms (14, 15) provided with air lines (16, 17), whereby the pressure control in these air lines (16, 17) is controlled against the actual welding power by means of a pneumatic valve piloted with the corresponding welding power, so that the piston (9) is moved to minimize or enlarge the pump room (12), whereby the check valve (21) has an adjustable flow rate throttle allowing a control of the cooling water stream and/or that an adjustable control unit for the adjustment of the water supply stream for the cooling and for the refill of the operating room is mounted in the air line (16, 17).

3. Device according to claim 2, **characterized in that** the motor drive of the feed-piston (9) is built by a driving piston (10) connected axially in line with the fee-piston (9) and being charged alternatively on both sides by a fluid medium and/or that the motor drive of the feed-piston (9) is an electric drive.

4. Device according to claim 2, **characterized in that** a fluid reservoir (19) is arranged in the run of the cooling water return line (6) and that the shut-off valve is a check valve arranged in the flow direction of the cooling means behind the fluid reservoir and/or that the fluid reservoir (19) is designed as a cooler whereby the fluid reservoir (19) preferably is designed as a water-air-heat exchanger and that the cooling air is supplied by an externally driven cooling fan (23).

5. Device according to one of the claims 2 to 4, **characterized in that** a cooling circuit (loop 22) for cooling a welding transformer is integrated in the cooling water flow line (4) and/or that a Thyristor step (25) provided for the control of the welding transformer is air-cooled whereby preferably a welding transformer as well as a Thyristor step (25) are integrated in a cooling circuit of the cooling water flow line (4) or the cooling water return line (6).

6. Device according to claims 2 to 4, **characterized in that** a valve operating as OR-element is integrated in the cooling water flow line (4), said valve taking a cooling water inflow (24) which was lead via a Thyristor step (25) and a welding transformer, and that a cooling water outflow (27) from the fluid reservoir (19) is provided.

7. Device according to claims 2 to 6, **characterized in that** pilotable valves are provided in the run of the cooling water flow line (4) and in the cooling water return line (6) and that the supply device serves as suction pump for the cooling water in the electrode arms (1) in a manner known from the prior art.

8. Device according to claims 2 or 3, **characterized in that** pressure air as pressure medium for the charge of the driving piston (10) is provided and/or that the 5/2-way-valve already provided at the pneumatic driven welding gun serves as control element for the cooling device.

## Revendications

1. Procédé de refroidissement d'installations de soudage par résistance par points, en particulier de pinces à souder par points refroidies par eau, avec une conduite d'alimentation en eau de refroidissement (4) qui se ramifie de manière à s'étendre jusqu'aux électrodes de soudage ainsi qu'à d'autres parties à refroidir, et avec une conduite de retour pour l'eau de refroidissement (6) qui reçoit les reflux d'eau de refroidissement depuis les électrodes de soudage et depuis les parties à refroidir, avec respectivement une soupape d'arrêt (20, 21) dans la conduite d'alimentation en eau de refroidissement et dans la conduite de retour pour l'eau de refroidissement, avec un dispositif destiné à transporter de l'eau de refroidissement sous pression dans ladite conduite d'alimentation en eau de refroidissement ainsi qu'avec un refroidisseur destiné à refroidir l'eau de refroidissement, un courant d'eau de refroidissement étant transporté temporairement via ladite conduite d'alimentation en eau de refroidissement (4) vers les endroits à refroidir de l'installation de soudage par résistance et depuis ceux-ci via la conduite de retour pour l'eau de refroidissement (6) vers le refroidisseur,
**caractérisé par le fait**
**que** le courant d'eau de refroidissement n'est transporté que durant le processus de soudage, tandis que, pendant le temps entre les processus de soudage, l'eau de refroidissement n'est pas déplacée au-delà d'un courant de repos éventuel, et que le débit de l'eau de refroidissement transportée par processus de soudage est adapté en fonction de la puissance actuelle de soudage.

2. Dispositif pour le refroidissement d'installations de soudage par résistance, en particulier de pinces à souder par points refroidies par eau, avec une conduite d'alimentation en eau de refroidissement (4) qui se ramifie de manière à s'étendre jusqu'aux électrodes de soudage ainsi qu'à d'autres parties à refroidir, et avec une conduite de retour pour l'eau de refroidissement (6) qui reçoit les reflux d'eau de refroidissement depuis les électrodes de soudage et depuis les parties à refroidir, avec respectivement une soupape d'arrêt (20,21) dans la conduite d'alimentation en eau de refroidissement et dans la conduite de retour pour l'eau de refroidissement, avec un dispositif de transport destiné à transporter de l'eau de refroidissement sous pression dans ladite conduite d'alimentation en eau de refroidissement ainsi qu'avec un refroidisseur destiné à refroidir l'eau de refroidissement, - pour la mise en oeuvre du procédé selon la revendication 1, **caractérisé par le fait que** ledit dispositif de transport présente une unité cylindre-piston (7), une face de piston du piston d'alimentation (9) limitant dans le cylindre (8) une chambre de pompe (12) dont le volume correspond au besoin en eau de refroidissement d'un processus de soudage, et que ledit piston d'alimentation est relié à un dispositif d'entraînement par moteur, que ladite chambre de pompe (12) est en communication avec la conduite d'alimentation en eau de refroidissement (4) et avec la conduite de retour pour l'eau de refroidissement (6), les soupapes d'arrêt (20, 21) disposées dans la conduite d'alimentation en eau de refroidissement (4) ainsi que dans la conduite de retour pour l'eau de refroidissement (6) étant réalisées en tant que clapets anti-retour (20, 21) s'ouvrant dans la direction du courant d'eau de refroidissement, que ladite unité cylindre-piston (7) présente un deuxième piston supplémentaire d'entraînement (10) qui est relié au piston d'alimentation (9) par une tige de piston (11) et qui définit, avec une cloison montée entre les deux pistons (9, 10) et avec le cylindre (8), deux chambres de travail (14, 15) qui sont pourvues de conduites à air comprimé (16, 17), la commande de pression dans ces conduites à air comprimé (16, 17) étant commandée en fonction de la puissance actuelle de soudage au moyen d'une soupape pneumatique commandée par la puissance correspondante de soudage, de sorte que le piston (9) se déplace afin de réduire ou d'agrandir la chambre de pompe (12), ledit clapet anti-retour (21) étant équipé d'un étrangleur réglable de débit qui permet de régler le courant d'eau de refroidissement, et/ou qu'un dispositif réglable de régulation pour le réglage du courant d'eau à transporter pour le refroidissement et pour le remplissage de la chambre de travail est interposé dans la conduite à air comprimé (16, 17).

3. Dispositif selon la revendication 2, **caractérisé par le fait que** le dispositif d'entraînement par moteur du piston d'alimentation (9) est formé par un piston d'entraînement (10) qui est relié coaxialement au piston d'alimentation (9) et qui peut être alimenté alternativement de part et d'autre en un milieu sous pression, et/ou que ledit dispositif d'entraînement par moteur du piston d'alimentation (9) est une commande électrique.

4. Dispositif selon la revendication 2, **caractérisé par le fait qu'**un réservoir égalisateur (19) est disposé dans l'allure de la conduite de retour pour l'eau de refroidissement (6) et que la soupape d'arrête réalisée comme clapet anti-retour (20) est placé, dans le sens d'écoulement du produit refroidisseur, en aval dudit réservoir égalisateur (19), et/ou que le réservoir égalisateur (19) est réalisé comme refroidisseur, ledit réservoir égalisateur (19) étant réalisé de préférence comme échangeur thermique eau-air et l'air de refroidissement étant mis à disposition par un ventilateur de refroidissement (23) entraîné de l'extérieur.

5. Dispositif selon les revendications 2 à 4, **caractérisé par le fait qu'**un circuit de refroidissement (boucle 22) destiné à refroidir un transformateur de soudage est intégré à la conduite d'alimentation en eau de refroidissement (4), et/ou qu'un étage thyristor (25) prévu pour la commande du transformateur de soudage est refroidi par air, de préférence aussi bien un transformateur de soudage qu'un étage thyristor (25) étant intégrés dans un circuit de refroidissement de la conduite d'alimentation en eau de refroidissement (4) ou de la conduite de retour pour l'eau de refroidissement (6).

6. Dispositif selon les revendications 2 à 4, **caractérisé par le fait qu'**une soupape agissant comme élément OU (26) est inclue dans la conduite d'alimentation en eau de refroidissement (4), ladite soupape recevant une conduite d'amenée d'eau de refroidissement (24) menant via ledit étage thyristor (25) et via un transformateur de soudage, et qu'une conduite d'échappement de l'eau de refroidissement (27) est prévue à partir du réservoir égalisateur (19).

7. Dispositif selon les revendications 2 à 6, **caractérisé par le fait que** des soupapes commandables sont prévues dans l'allure de la conduite d'alimentation en eau de refroidissement (4) et dans la conduite de retour pour l'eau de refroidissement (6), et que le dispositif de transport sert, comme connu en soi, de pompe d'aspiration pour l'eau de refroidissement dans les bras d'électrode (1).

8. Dispositif selon les revendications 2 ou 3, **caractérisé par le fait que** le milieu sous pression prévu pour alimenter le piston d'entraînement (10) est de l'air comprimé, et/ou que la soupape à 5/2 voies qui est présente de toute façon sur la pince à souder actionnée de manière pneumatique sert d'élément de commande pour le dispositif de refroidissement.
